# EUROPEAN PATENT APPLICATION

(11) **EP 4 831 727 A1**
(43) Date of publication of application: **28.10.2026**
(21) Application number: 24907202.6
(22) Date of filing: 06.12.2024
(51) Int. Cl.: G02C 13/00, G02C 7/06

(54) **SPECTACLE LENS EVALUATION METHOD, DESIGN METHOD, SELECTION METHOD, AND MANUFACTURING METHOD**

(30) Priority: 19.12.2023 JP 2023213610
(71) Applicant: Nikon-Essilor Co., Ltd., Tokyo 130-0026 (JP)
(72) Inventor: YOSHIDA Yoshinori, Tokyo 130-0026 (JP); MIYAZAKI Ken, Tokyo 130-0026 (JP); CHO Sungjin, Tokyo 130-0026 (JP); AIKAWA Naoshi, Tokyo 140-8601 (JP); NONAKA Azuna, Tokyo 140-8601 (JP); SHIRAYAMA Hiroki, Tokyo 140-8601 (JP)
(74) Representative: Viering, Jentschura & Partner mbB Patent- und Rechtsanwälte
(86) International application number: PCT/JP2024/043238
(87) International publication number: WO 2025/134816

(57) **Abstract**

A method for evaluating a spectacle lens is constituted comprising: a calculation step of calculating a three-dimensional clear vision region AC in a visual field space visible through a spectacle lens (10) of spectacles (1) in a state in which a wearer wears the spectacles (1); a viewable region detection step of detecting, when the wearer views, through the spectacle lens (10), an object to be viewed OBJ present in the visual field space, a viewable region in which the three-dimensional clear vision region AC and the object to be viewed OBJ overlap; and an evaluation step of evaluating the performance of the spectacle lens (10) based on the detected viewable region.

## Description

### TECHNICAL FIELD

The present invention relates to a method for evaluating a spectacle lens, a method for designing and a method for selecting a spectacle lens based on the evaluation, and a method for manufacturing a spectacle lens based on the designing method and the selecting method.

### BACKGROUND ART

In manufacturing a spectacle lens, it is necessary to design and manufacture the spectacle lens suited to the eye of a wearer. For this reason, it is first necessary to evaluate and examine the vision of the wearer. Patent Document 1 and Patent Document 2 are prior art documents related to such evaluation and examination.

### PRIOR ART DOCUMENT

### PATENT DOCUMENTS

Patent Document 1: JP 2001-318344 A
Patent Document 2: JP 2014-85575 A

### SUMMARY OF THE INVENTION

### PROBLEMS TO BE SOLVED BY THE INVENTION

Although a spectacle lens is designed and manufactured based on the results of an examination of a wearer's visual ability, there is a problem in that it is difficult to evaluate whether the spectacle lens designed and manufactured in this way is suitable for the wearer.

In view of such a problem, the present invention provides a new method for evaluating a spectacle lens, a method for designing and a method for selecting a spectacle lens suitable for a wearer based on the evaluation, and a method for manufacturing a spectacle lens based on the designing method and the selecting method.

### SOLUTION TO THE PROBLEMS

A method for evaluating a spectacle lens according to the present invention comprises: a calculation step of calculating a three-dimensional clear vision region in a visual field space visible through the spectacle lens of spectacles in a state in which a wearer wears the spectacles; a viewable region detection step of detecting, when the wearer views, through the spectacle lens, an object to be viewed present in the visual field space, a viewable region in which the three-dimensional clear vision region and the object to be viewed overlap; and an evaluation step of evaluating the performance of the spectacle lens based on the detected viewable region.

A method for designing a spectacle lens according to the present invention comprises a design step of performing a corrective design of a design of the spectacle lens based on the evaluation in the evaluation step described above.

A method for selecting a spectacle lens according to the present invention comprises a selection step of selecting an appropriate spectacle lens design from a plurality of spectacle lens designs prepared in advance based on the evaluation in the evaluation step described above.

A method for manufacturing a spectacle lens according to the present invention comprises a step of manufacturing the spectacle lens based on the corrective design in the design step described above.

A method for manufacturing a spectacle lens according to the present invention comprises a step of manufacturing the spectacle lens based on the selection in the selection step described above.

### BRIEF DESCRIPTION OF DRAWINGS

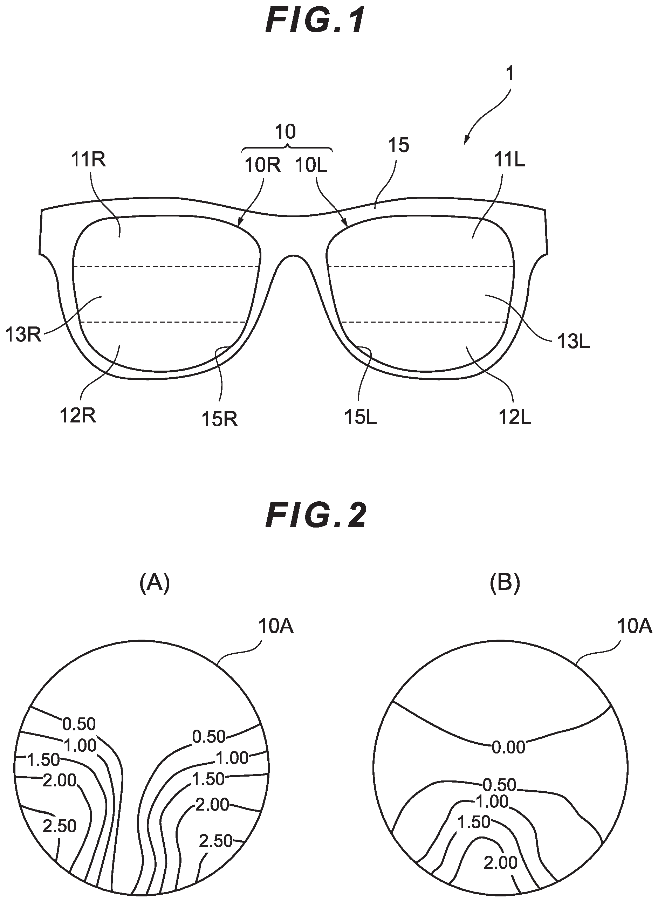

FIG. 1 is a schematic diagram showing spectacles comprising a pair of spectacle lenses according to the present embodiment.
FIG. 2 shows examples of optical performance evaluation charts of a general progressive-power lens. FIG. 2(A) shows the astigmatism distribution of the lens and FIG. 2(B) shows the power distribution (addition power distribution) of the lens.

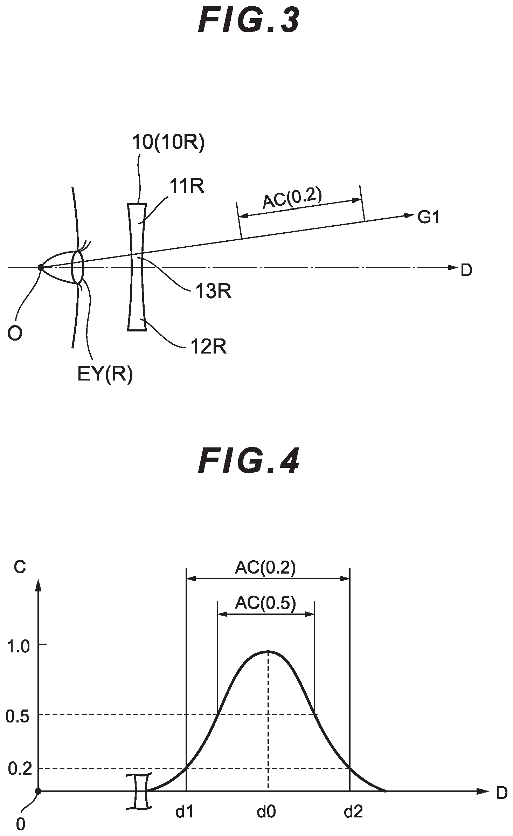

FIG. 3 is a schematic cross-sectional view showing a state in which the wearer wears spectacles, taken along a surface extending vertically through the lateral center of the spectacle lens for the right eye.
FIG. 4 is a graph showing, on the horizontal axis, the distance extending forward from the center O of the eye (center of the line of sight) along the line of sight G1 shown in FIG. 3, and showing, on the vertical axis, the contrast value C at each position on the line of sight G1.

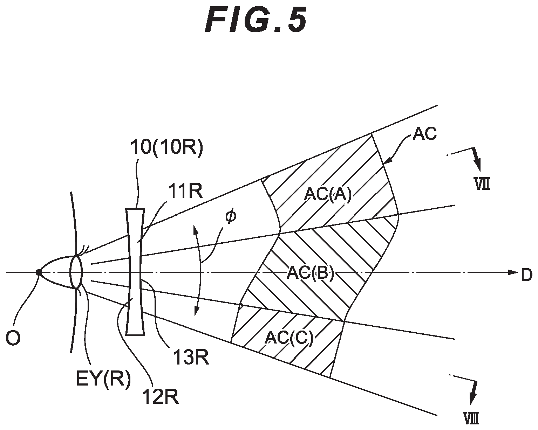

FIG. 5 is a schematic cross-sectional view showing a state in which the wearer wears spectacles, taken along a surface extending vertically through the lateral center of the spectacle lens for the right eye, and representing the clear vision region visible through the spectacle lens for the right eye by means of three-dimensional polar coordinates (D, φ, θ).

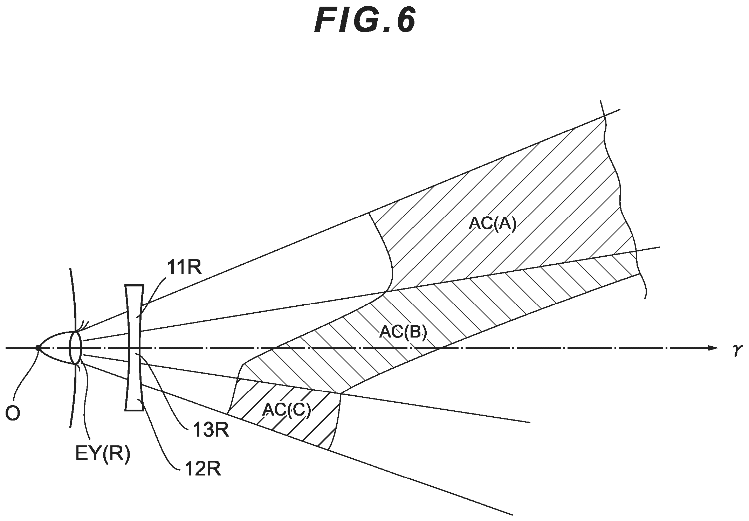

FIG. 6 is a schematic cross-sectional view showing a state in which the wearer wears spectacles, taken along a surface extending vertically through the lateral center of the spectacle lens for the right eye, and representing the clear vision region visible through the spectacle lens for the right eye by means of three-dimensional polar coordinates (r, φ, 0).

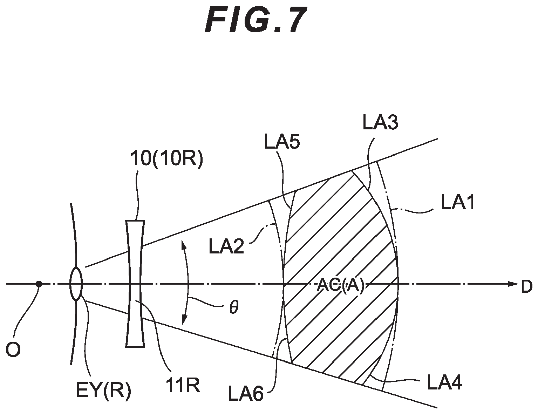

FIG. 7 is a planar cross-sectional view showing a cross-section along arrow VII passing through the distance vision portion clear vision region AC(A) in FIG. 5, and showing the clear vision region within that cross-section.

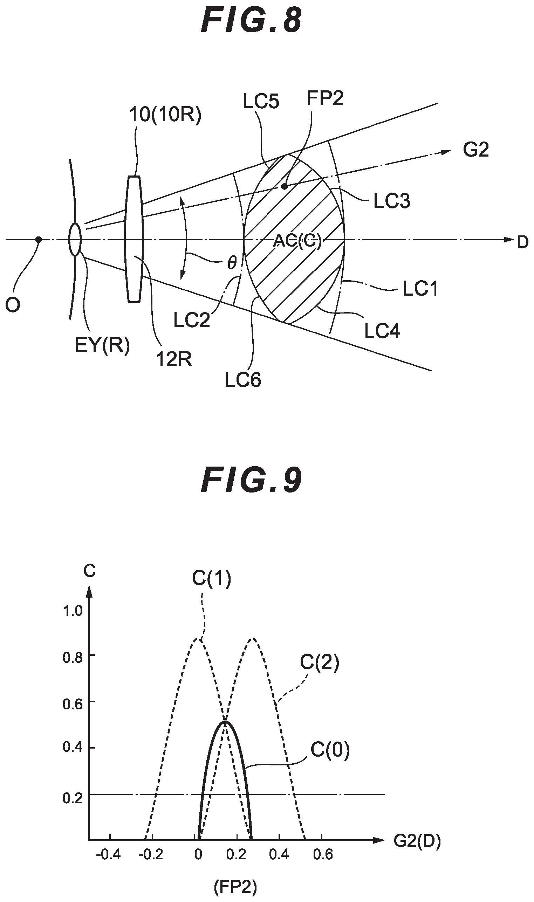

FIG. 8 is a planar cross-sectional view showing a cross-section along arrow VIII passing through the near vision portion clear vision region AC(C) in FIG. 5, and showing the clear vision region within that cross-section.
FIG. 9 is a graph showing the difference in change of contrast value C in directions differing by 90 degrees due to astigmatism.

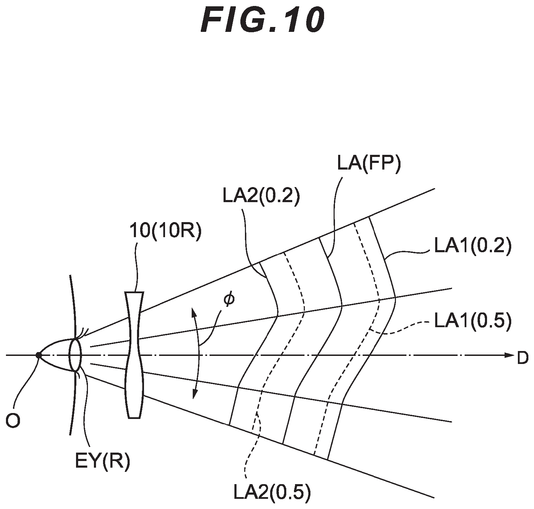

FIG. 10 is a schematic cross-sectional view showing a state in which the wearer wears spectacles, taken along a surface extending vertically through the lateral center of the spectacle lens for the right eye, and showing the clear vision region visible through the spectacle lens for the right eye.

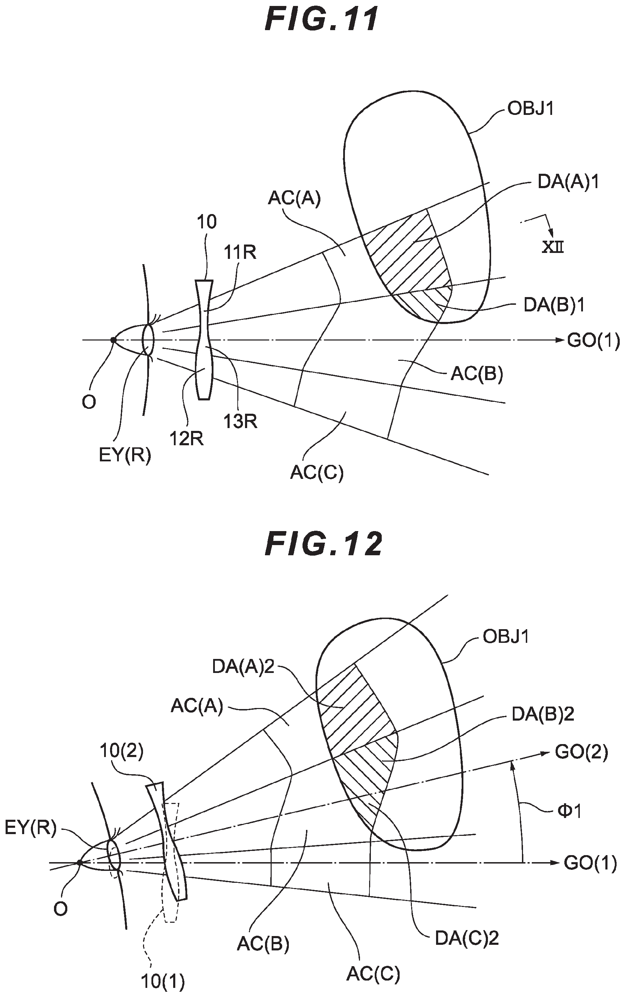

FIG. 11 is a schematic side cross-sectional view showing, in a state in which the wearer wears the spectacles and faces the front, a cut taken along a surface extending vertically through the lateral center of the spectacle lens for the right eye, and showing a viewable range in which the clear vision region visible through the distance vision portion of the spectacle lens for the right eye and the object to be viewed overlap.
FIG. 12 is a schematic side cross-sectional view showing, in a state in which the wearer wears the spectacles and has raised the head upward from facing the front, a cut taken along a surface extending vertically through the lateral center of the spectacle lens for the right eye, and showing a viewable range in which the clear vision region visible through the distance vision portion of the spectacle lens for the right eye and the object to be viewed (the object to be viewed being shown as a transparent object for the purpose of explanation) overlap.

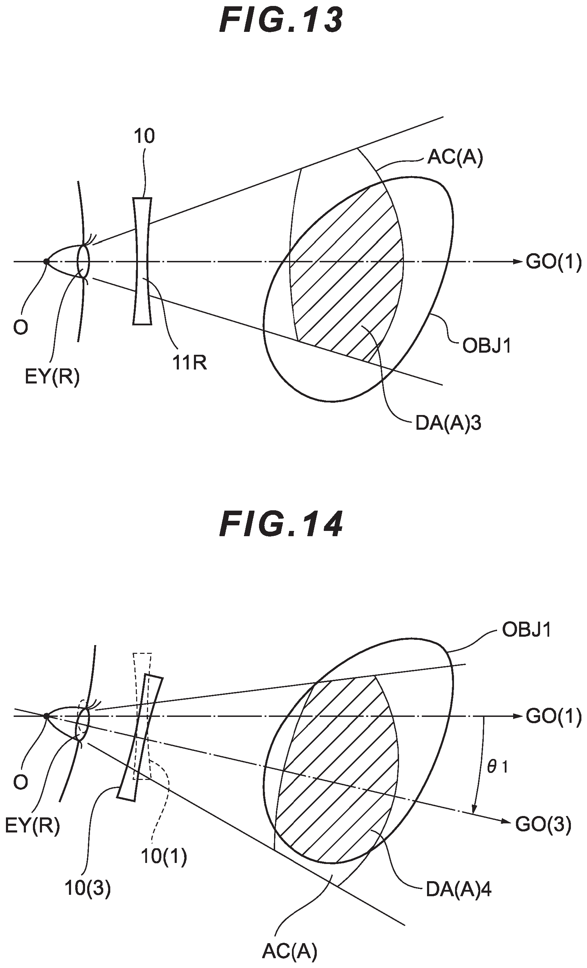

FIG. 13 is a schematic planar cross-sectional view showing, in a state in which the wearer wears the spectacles and faces the front, the range visible through the distance vision portion of the spectacle lens for the right eye cut on a horizontal cross-section along arrow XII in FIG. 11, and showing a viewable range in which the clear vision region visible through the distance vision portion of the spectacle lens for the right eye and the object to be viewed overlap.
FIG. 14 is a schematic planar cross-sectional view showing, in a state in which the wearer wears the spectacles and has turned the head to the right from facing the front, the range visible through the distance vision portion of the spectacle lens for the right eye cut on a horizontal cross-section, and showing a viewable range in which the clear vision region visible through the distance vision portion of the spectacle lens for the right eye and the object to be viewed overlap.

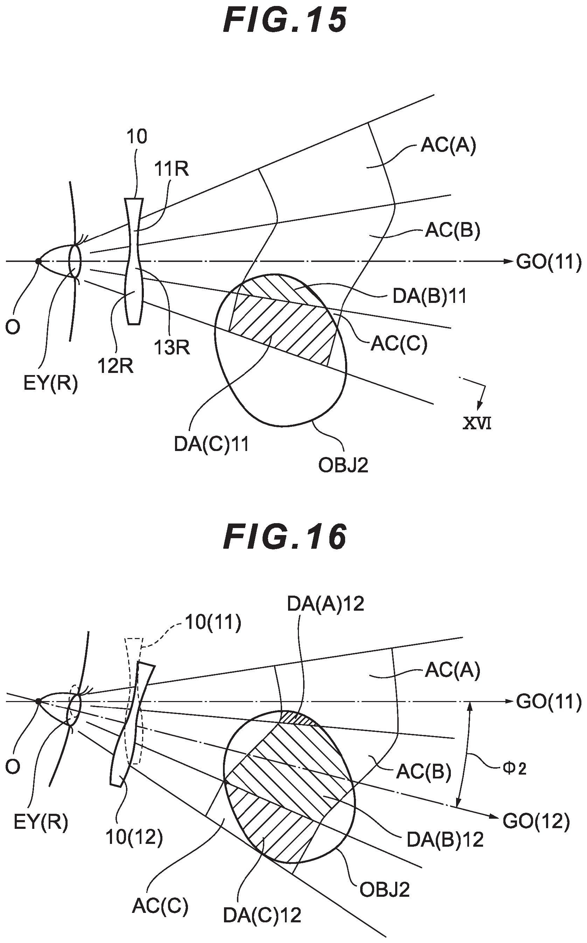

FIG. 15 is a schematic side cross-sectional view showing, in a state in which the wearer wears the spectacles and faces the front, a cut taken along a surface extending vertically through the lateral center of the spectacle lens for the right eye, and showing a viewable range in which the clear vision region visible through the near vision portion of the spectacle lens for the right eye and the object to be viewed overlap.
FIG. 16 is a schematic side cross-sectional view showing, in a state in which the wearer wears the spectacles and has raised the head upward from facing the front, a cut taken along a surface extending vertically through the lateral center of the spectacle lens for the right eye, and showing a viewable range in which the clear vision region visible through the near vision portion of the spectacle lens for the right eye and the object to be viewed overlap.

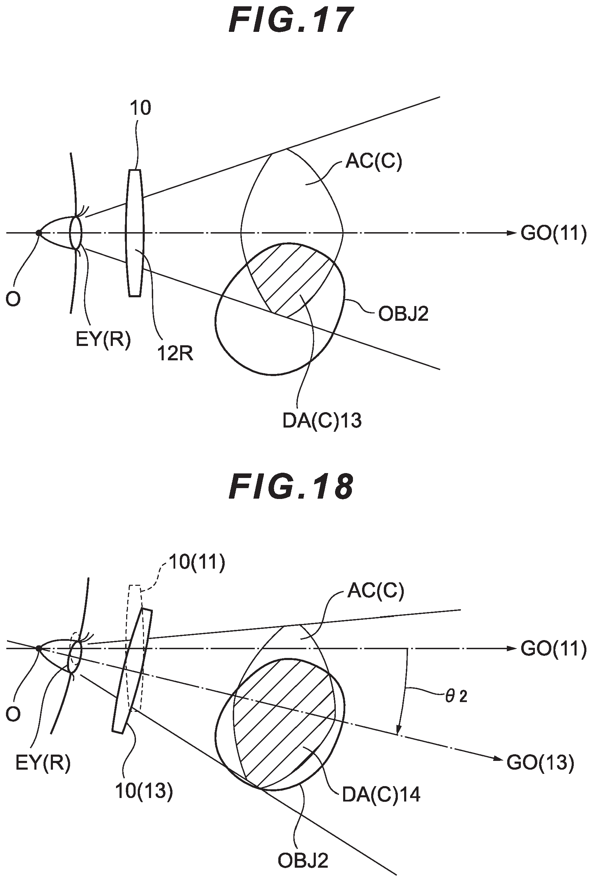

FIG. 17 is a schematic planar cross-sectional view showing, in a state in which the wearer wears the spectacles and faces the front, the range visible through the near vision portion of the spectacle lens for the right eye cut on a horizontal cross-section along arrow XVI in FIG. 15, and showing a viewable range in which the clear vision region visible through the near vision portion of the spectacle lens for the right eye and the object to be viewed overlap.
FIG. 18 is a schematic planar cross-sectional view showing, in a state in which the wearer wears the spectacles and has turned the head to the right from facing the front, the range visible through the near vision portion of the spectacle lens for the right eye cut on a horizontal cross-section, and showing a viewable range in which the clear vision region visible through the near vision portion of the spectacle lens for the right eye and the object to be viewed overlap.

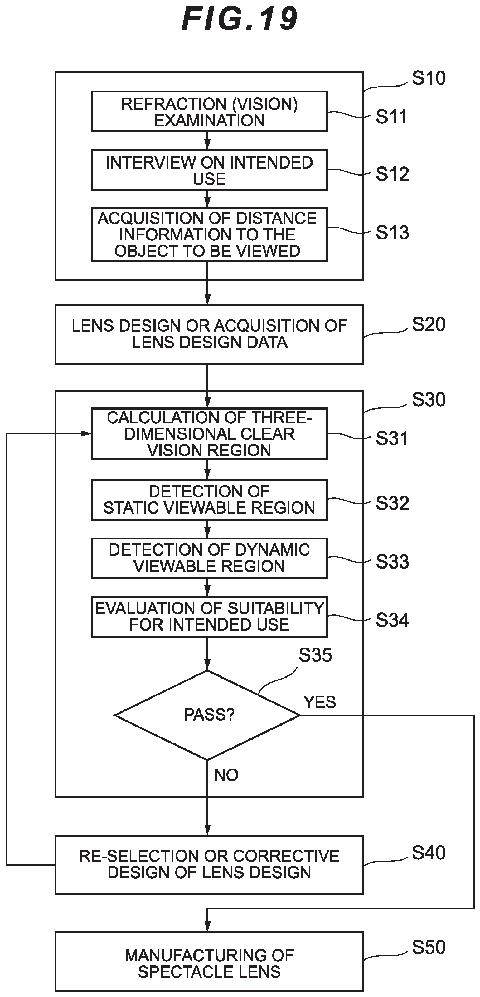

FIG. 19 is a flowchart showing a series of steps for evaluating the performance and the like of a spectacle lens by the evaluation method according to the present embodiment, performing a corrective design of this spectacle lens based on the evaluation, and manufacturing a spectacle lens based on the corrective design.

### DESCRIPTION OF EMBODIMENTS

Preferred embodiments according to the present invention will be described below. As one example of the present embodiment, spectacles 1 to which the method for evaluating a spectacle lens according to the present invention is applied are schematically shown in FIG. 1. As shown in FIG. 1, the spectacles 1 comprise a spectacle lens for the right eye 10R used for the right eye EY(R), a spectacle lens for the left eye 10L used for the left eye EY(L), and a spectacle frame 15 having left and right mounting openings 15R, 15L to which both spectacle lenses 10R, 10L are attached. In the present embodiment, the spectacle lens for the right eye 10R and the spectacle lens for the left eye 10L may be collectively referred to simply as spectacle lens 10. The spectacle lens 10 in this embodiment is a lens called a so-called progressive-power lens. The positional relationship of "up, down, left, and right" of the spectacle lens 10 indicates the positional relationship when the spectacle lens 10 is attached to the spectacle frame 15 and used. That is, when the wearer wears the spectacles 1, the upward, downward, leftward, and rightward directions as seen by the wearer are referred to as the upward, downward, leftward, and rightward directions of the spectacles 1 and the spectacle lens 10. Furthermore, the direction in which the wearer looks through the spectacle lens 10 of the spectacles 1 is referred to as the forward direction.

As shown in FIG. 1, the spectacle lens for the right eye 10R comprises a distance vision portion for the right eye 11R located in the upper part, a near vision portion for the right eye 12R formed below the distance vision portion for the right eye 11R, and a progressive portion for the right eye 13R formed in an intermediate part connecting the distance vision portion for the right eye 11R and the near vision portion for the right eye 12R. The distance vision portion for the right eye 11R has a refractive power suitable for distance vision, and the near vision portion for the right eye 12R has a refractive power suitable for near vision. In the progressive portion for the right eye 13R, the refractive power changes continuously from the refractive power suitable for distance vision toward the refractive power suitable for near vision, as one goes from the side closer to the distance vision portion for the right eye 11R toward the side closer to the near vision portion for the right eye 12R.

As shown in FIG. 1, the spectacle lens for the left eye 10L comprises a distance vision portion for the left eye 11L located in the upper part, a near vision portion for the left eye 12L formed below the distance vision portion for the left eye 11L, and a progressive portion for the left eye 13L formed in an intermediate part connecting the distance vision portion for the left eye 11L and the near vision portion for the left eye 12L. The distance vision portion for the left eye 11L has a refractive power suitable for distance vision, and the near vision portion for the left eye 12L has a refractive power suitable for near vision. In the progressive portion for the left eye 13L, the refractive power changes continuously from the refractive power suitable for distance vision toward the refractive power suitable for near vision, as one goes from the side closer to the distance vision portion for the left eye 11L toward the side closer to the near vision portion for the left eye 12L.

In the present embodiment, "power" (unit: diopter [D]) is used as the numerical value representing refractive power. Furthermore, the change in power in the progressive portion and the near vision portion relative to the power in the distance vision portion (refractive power suitable for distance vision) is referred to as "addition power."

The spectacle lens 10 described above is manufactured by manufacturing a lens 10A with the design as shown in FIG. 2 and then processing it to conform to the shape of the mounting openings 15R, 15L of the spectacle frame 15. As described above, the spectacle lens 10 is a progressive-power lens, and the lens 10A has an astigmatism distribution as shown in FIG. 2(A) and a power distribution (addition power distribution) as shown in FIG. 2(B). Note that astigmatism is generally also referred to as astigmatic refractive power, and in this specification, astigmatism may also be referred to as astigmatic refractive power.

The method for evaluating a spectacle lens according to the present invention will be described below, taking the spectacle lens for the right eye 10R as an example. The evaluation method of the present invention calculates a three-dimensional clear vision region in the forward visual field space viewed through the spectacle lens 10, and evaluates lens performance and the like based on the degree of overlap between the three-dimensional clear vision region and an object to be viewed. First, the calculation of this three-dimensional clear vision region will be described. FIG. 3 shows a state in which the wearer wears the spectacles 1, taken along a surface extending vertically and also extending forward and backward through the lateral center of the spectacle lens for the right eye 10R. The spectacle lens 10 (spectacle lens for the right eye 10R) is positioned in front of the right eye EY(R) of the wearer, and the wearer views the forward visual field space through the spectacle lens 10 with the right eye EY(R).

In FIG. 3, the right eye EY(R) has a crystalline lens on the front side, and the right eye EY(R) rotates about the center of rotation of the eye O (center of the eyeball), changing the direction of the line of sight G, so that the wearer views forward objects through various points on the spectacle lens 10. As standard values, the distance from the center of rotation of the eye O to the cornea is approximately 13 mm, and the distance from the cornea at the front of the crystalline lens to the rear surface of the lens (the surface close to the eye) is approximately 12 mm. The crystalline lens has accommodation ability, and this ability allows a person to view objects from near to far distances with the naked eye; however, the spectacles 1 become necessary when this accommodation ability declines. In the method for evaluating a spectacle lens according to the present invention, even if the accommodation ability declines, each individual still has some accommodation ability, and it is necessary to take this into account in the evaluation. Note that, normally, the distance from the cornea is used as the reference point for the distance from the eye; however, since the present application uses a polar coordinate system centered on the center of rotation of the eye O, the center of rotation of the eye O is used as the reference point.

Taking one line of sight G1 indicated by an arrow in FIG. 3 as an example, the method for determining the three-dimensional clear vision region will be described. The change in contrast value along this line of sight G1 is shown in FIG. 4. In FIG. 4, the distance extending forward from the center of rotation O (center of the line of sight) along the line of sight G1 is shown on the horizontal axis in diopter D units (1/m), and the contrast value C (discrimination contrast value) visible to the right eye EY(R) at each position on the line of sight G1 is shown on the vertical axis. For example, the spectacle lens 10 is designed so that focus is achieved (focused) at the position of distance d0 when the right eye EY(R) views through the spectacle lens 10 along the line of sight G1, the contrast value C is the largest at this position, and objects at this position can be seen most clearly.

As the position viewed through the spectacle lens 10 by the right eye EY(R) moves forward and backward from the position of distance d0, the focus shifts (defocuses), causing blur (out-of-focus), and the degree of this blur increases as one moves away from the position of distance d0. The contrast value C decreases as shown in FIG. 4 in accordance with the magnitude of the blur that occurs in this way. For example, at the position of distance d0, focus is at its best, so the contrast value C is close to 1.0, and the object being viewed through the spectacle lens 10 by the right eye EY(R) can be seen clearly without any decrease in contrast. Note that in the present embodiment, distance is defined in diopters D (unit: 1/m), but it may instead be expressed as the actual length r (unit: m, etc.).

As the position of the object being viewed through the spectacle lens 10 by the right eye EY(R) moves forward and backward from the position of distance d0, the blur increases, so the contrast value C, which indicates the degree to which the object at that position can be distinguished, decreases. A higher contrast value C means the object can be seen more clearly, and the front-to-rear directional region on the line of sight G1 where the contrast value C becomes greater than a predetermined threshold is determined as the linear clear vision region. For example, as shown in FIG. 4, with a contrast value C = 0.2 as the threshold, the region AC(0.2) where the contrast value is equal to or greater than this value can be set as the linear clear vision region. The linear clear vision region is not limited to this region AC(0.2); for example, as shown in FIG. 4, with a contrast value C = 0.5 as the threshold, the region AC(0.5) where the contrast value is equal to or greater than this value may be set as the linear clear vision region. In this way, the linear clear vision region AC can be variously set using the contrast value as a threshold, but first, the case in which the region AC(0.2) where the contrast value is equal to or greater than the threshold of contrast value C = 0.2 is set as the linear clear vision region will be described as an example.

Note that FIG. 4 shows an example in which the crystalline lens has no accommodation function; however, if accommodation function is present, the width of distance d0 at which the contrast value C becomes large expands in the direction approaching the eye. Accordingly, the curve on the side closer to the eye than distance d0 in FIG. 4 becomes a curve that is shifted in parallel by the corresponding amount of such expansion.

The linear clear vision region AC(0.2) on the line of sight G1 set in this way is shown in FIG. 3. The line of sight G1 passes through one point on the spectacle lens 10, and by scanning this point on the spectacle lens 10 to move the line of sight G along the surface of the spectacle lens 10 and cumulatively displaying the linear clear vision region AC(0.2), the three-dimensional clear vision region AC as shown in FIGS. 5 to 8 can be obtained. As described above, the spectacle lens 10 (10R) comprises the distance vision portion 11R, the progressive portion 13R, and the near vision portion 12R, each having a different position of focus. Therefore, as shown in FIG. 5, the three-dimensional clear vision region AC is composed of the distance vision portion clear vision region AC(A) when viewed through the distance vision portion 11R, the progressive portion clear vision region AC(B) when viewed through the progressive portion 13R, and the near vision portion clear vision region AC(C) when viewed through the near vision portion 12R. The distance vision portion 11R has a low power (toward the minus side) and has the distance vision portion clear vision region AC(A) far away; the near vision portion 12R has a high power (addition power) (toward the plus side) and has the near vision portion clear vision region AC(C) close by; and in the progressive portion 13R, the power (addition power) increases from top to bottom, so the progressive portion clear vision region AC(B) gradually becomes closer from the distance vision portion clear vision region AC(A) toward the near vision portion clear vision region AC(C). As can be seen from this, the wearer of the spectacles 1 can clearly see far objects through the distance vision portion 11R, can clearly see near objects through the near vision portion 12R, and can clearly see the intermediate range through the progressive portion 13R.

When representing the three-dimensional clear vision region AC as shown in FIGS. 5, 8, and 9, it can be expressed in three-dimensional polar coordinates (D, φ, θ) using the vertical angle φ, which is the vertical direction angle centered on the center of line of sight O shown in FIG. 5, the lateral angle θ, which is the lateral direction angle centered on the center of line of sight O shown in FIGS. 7 and 8, and the distance D (diopter) from the center of line of sight O. In this case, FIG. 5 shows the two-dimensional cross-sectional shape based on the vertical angle φ and the distance D. The distance D from the center of the line of sight is expressed in diopter units.

Instead of the distance D in diopter units, it may be expressed in three-dimensional polar coordinates (r, φ, θ) using the distance r (m). An example of expression in three-dimensional polar coordinates (r, φ, θ) instead of FIG. 5 is shown in FIG. 6. The three-dimensional clear vision region is the same in FIG. 5 and FIG. 6, but the illustrated size differs greatly, as shown, depending on whether it is in diopters (D) or in actual distance r (m). Note that in the following, figures expressed in three-dimensional polar coordinates (D, φ, θ) using diopters (D) for the length in the direction of the line of sight will be used for explanation.

The distance vision portion clear vision region AC(A), the progressive portion clear vision region AC(B), and the near vision portion clear vision region AC(C) shown in FIG. 5 are three-dimensional regions that also spread in the lateral direction of the spectacle lens 10. To show this three-dimensional shape, a planar cross-section along arrow VII passing through the distance vision portion clear vision region AC(A) shown in FIG. 5 is shown in FIG. 7, and a planar cross-section along arrow VIII passing through the near vision portion clear vision region AC(C) is shown in FIG. 8. FIGS. 7 and 8 show two-dimensional cross-sectional shapes based on the lateral angle θ and the distance D, and together with the two-dimensional cross-sectional shape based on the vertical angle φ and the distance D in FIG. 5, the three-dimensional shape of the clear vision region can be determined.

First, the distance vision portion clear vision region AC(A) shown in FIG. 7 will be described. The distance vision portion clear vision region AC(A) is formed by the upper part of the spectacle lens 10; as shown in FIG. 2(B), it is a lens configuration with a low power (toward the minus side) with focus far away; and as shown in FIG. 2(A), the astigmatism (astigmatic refractive power) occurs to only a small degree on both the left and right sides of the distance vision portion clear vision region AC(A) and is relatively small. When there is no astigmatism, the arc-shaped range surrounded by the dashed-dotted lines LA1 and LA2 in FIG. 7 becomes the clear vision region; however, affected by the astigmatism on both the left and right sides of the distance vision portion clear vision region AC(A), the clear vision region becomes slightly narrower as shown by the solid lines LA3 to LA6.

Next, the near vision portion clear vision region AC(C) shown in FIG. 8 will be described. The near vision portion clear vision region AC(C) is formed by the lower part of the spectacle lens 10; as shown in FIG. 2(B), it is a lens configuration with a high power (addition power) (toward the plus side) with focus close by; and as shown in FIG. 2(A), the astigmatism (astigmatic refractive power) increases on both the left and right sides of the near vision portion clear vision region AC(C). When there is no astigmatism, the arc-shaped range surrounded by the dashed-dotted lines LC1 and LC2 in FIG. 8 becomes the clear vision region; however, in the near vision portion clear vision region AC(C), the astigmatism rapidly increases as one moves to both the left and right sides. Affected by this rapidly increasing astigmatism, the clear vision region rapidly narrows as one moves to both the left and right sides, as shown by the solid lines LC3 to LC6. Therefore, it can often happen that, as one moves toward both the left and right outer edges of the near vision portion clear vision region AC(C), the clear vision region disappears.

The above description shows, as can be seen from the fact that the position of the spectacle lens 10 is fixed in each figure, the viewing region in a state in which the wearer of the spectacles 1 does not perform head movement that would move the position of the spectacles. Each of the clear vision regions AC(A) to AC(C) shows the clear vision region that occurs when the wearer, without moving the head, rotates only the eyeball around the center of rotation of the eye O and moves the line of sight within the lens region of the spectacle lens 10.

Incidentally, the decrease in contrast value C due to astigmatism differs depending on the direction within the plane perpendicular to the optical axis (the surface of the spectacle lens 10). For example, the change in contrast value C differs between the lateral direction and the vertical direction of the spectacle lens 10 (i.e., directions differing by 90 degrees). This will be described with reference to FIG. 9 regarding the contrast value C on the line of sight G2 indicated by the arrow in FIG. 8. FIG. 9 is a graph showing the position on the line of sight G2 on the horizontal axis and the contrast value C on the vertical axis, and is the result of so-called MTF (Modulation Transfer Function) calculation. The position FP2 on the line of sight G2 where focus is achieved is shown on the horizontal axis at the origin position 0 in FIG. 9. In FIG. 9, positions on the forward side from this origin position 0 (FP2) are shown as positive values on the horizontal axis, and positions on the near side are shown as negative values.

On the line of sight G2, because the astigmatism of the spectacle lens 10 is large, for example, the contrast value C of the focal line in the lateral direction, as shown by dashed line C(1), is largest at the origin position 0 and decreases as it moves forward and backward from the origin position 0. On the other hand, the contrast value C of the focal line in the vertical direction, as shown by dashed line C(2), is largest at a position of approximately 0.25 D and decreases as it moves forward and backward from the position of approximately 0.25 D. In this way, it is necessary to determine the clear vision region based on the contrast value C, which differs between the lateral direction and the vertical direction of the spectacle lens 10 (i.e., the vertical direction and horizontal direction differing by 90 degrees). Therefore, at each position on line of sight G2, the geometric mean contrast value C(B) of the contrast value C(1A) on dashed line C(1) and the contrast value C(2A) on dashed line C(2) is determined, and the clear vision region is determined by the geometric mean contrast value C(B). Note that the geometric mean contrast value C(B) is the square root of the product of contrast value C(1A) and contrast value C(2A). The geometric mean contrast value C(B) determined in this way becomes the value shown by solid line C(0) on the line of sight G2, and the range on this solid line C(0) where the contrast value C becomes equal to or greater than 0.2 is taken as the clear vision region. Note that the calculation of the geometric mean contrast value C(B) based on the above formula is one example, and other calculation methods may be used, such as one based on the position of approximately -0.2 D on the minus side end of contrast value C(1A) to the position of approximately 0.5 D on the plus side end of contrast value C(2A).

As the contrast value C for defining the clear vision region, various standards can be used as threshold values, such as a standard contrast value at which there is no problem with the readability of the object, a high contrast value at which no decrease in contrast is felt, a low contrast value at which characters can barely be read, and so on. This makes it possible to perform various evaluations in the evaluations described later.

The setting of the clear vision region using the contrast value C described above is based on the contrast value at each position of the lens, and is to set the three-dimensional clear vision region using the so-called MTF (Modulation Transfer Function). In this case, in the cross-sectional view shown in FIG. 5, since the power changes according to the vertical direction angle (angle φ) position, the clear vision region moves closer from AC(A) to AC(C). The clear vision regions shown in FIGS. 7 and 8 (the distance vision portion clear vision region AC(A) and the near vision portion clear vision region AC(C)) correspond to the height (angle φ) at the lateral direction angle (angle θ), and the three-dimensional clear vision region according to MTF is defined.

The example of setting the range where the contrast value C becomes equal to or greater than 0.2 as the clear vision region AC(0.2) has been described above, but as mentioned above, the clear vision region can also be set based on different contrast values C. For example, as shown in FIG. 4, with a contrast value C = 0.5 as the threshold, the region AC(0.5) where the contrast value is equal to or greater than this value may be set as the clear vision region. As shown in FIG. 10, the range of the clear vision region set in this way is: the range sandwiched between the two front-and-rear iso-contrast surfaces LA1(0.2) and LA2(0.2) where contrast value C = 0.2 becomes the clear vision region AC(0.2), and the range sandwiched between the two front-and-rear iso-contrast surfaces LA1(0.5) and LA2(0.5) where contrast value C = 0.5 becomes the clear vision region AC(0.5). Naturally, the clear vision region AC(0.2) is a wider region than the clear vision region AC(0.5). Also, the iso-contrast surface LA(FP) where focus is at its best and the contrast value C is at its maximum is located at an intermediate position.

The three-dimensional clear vision region is calculated and set as described above, and the lens performance is evaluated using the three-dimensional clear vision region calculated and set in this way. This evaluation is performed based on the three-dimensional degree of overlap between the clear vision region and an object to be viewed that a wearer wearing the spectacles views through the spectacle lens, and this will be described in detail below.

Objects that a person views are located at various near and far positions, and a person having normal eyesight and sufficient accommodation ability can view them from distant objects to be viewed to near objects to be viewed, with the crystalline lens performing focus adjustment. When the accommodation ability of the crystalline lens declines due to aging or the like, spectacles are used to compensate for this; and the evaluation of how well an object to be viewed can be seen while wearing the spectacles is one factor in evaluating the performance of the spectacle lens. The evaluation method according to the present embodiment detects how much the clear vision region covers an object to be viewed when viewed through the spectacle lens, that is, the degree of overlap between the clear vision region and the object to be viewed, and evaluates the performance of the spectacle lens and the like based on this.

There are various objects to be viewed, from distant objects to near objects, and the evaluation is performed using objects to be viewed divided into the following positions.

(1) Distant object: An object located from infinity to 5 m (0.0 D to 0.2 D) is taken as the object to be viewed; this is, for example, an object to be viewed required when driving an automobile.
(2) Substantially distant object: An object located from 5 m to 2 m (0.2 D to 0.5 D) is taken as the object to be viewed; for example, a road sign, a billboard, a station timetable, and the like can be considered as objects to be viewed.
(3) Intermediate-distance object: An object located from 2 m to 50 cm (0.5 D to 2.0 D) is taken as the object to be viewed; for example, a whiteboard or display in a meeting, a person facing the wearer, a television, a personal computer screen, and the like can be considered as objects to be viewed.
(4) Near-distance object: An object located from 50 cm onward (2.0 D onward) is taken as the object to be viewed; for example, a smartphone, a newspaper, a book, a PC keyboard, and the like can be considered as objects to be viewed.

When the wearer views the above objects through the spectacle lens in a state in which the wearer wears the spectacles, the degree of overlap between the clear vision region and the object to be viewed is detected, and the performance of the spectacle lens and the like is detected based on this. The spectacle lens is made by limiting the distance range desired to be viewed, such as a lens for myopia, a lens for hyperopia, a lens for presbyopia, or a progressive-power lens also called a bifocal lens, and it is necessary to evaluate the degree of overlap with an object to be viewed corresponding to the distance range desired to be viewed.

Furthermore, regarding the viewing range, the viewing range when a person moves the eye (eyeball) to view, the viewing range when the person moves the head up, down, left, and right to view, and further the viewing range when the person views by combining the movement of the eye and the movement of the head greatly differ. As a reference document regarding such viewing ranges, there is Rinsho Ganka (Clinical Ophthalmology), Vol. 71, No. 13, p. 1796, December 2017, which will be cited for the description. On page 1796 of this reference document, FIG. 1 shows the visual field ranges corresponding to the up-down and left-right movements of the eyeball and the up-down and left-right movements of the head, and based on this FIG. 1, the following description is given regarding the relationship between the visual field angle and the information reception characteristics.

(a) Discriminative visual field: A central vision region having excellent visual functions such as eyesight, within a range of 5° in the up, down, left, and right directions.
(b) Effective visual field: A region in which information can be received instantaneously by eye movement alone, within a range of approximately 30° to the left and right, approximately 8° upward, and approximately 12° downward.
(c) Stable fixation visual field: A region in which fixation can be performed comfortably by eye and head movements and in which information can be received effectively, within a range of 60° to 90° to the left and right, 20° to 30° upward, and 25° to 40° downward.

In the present embodiment, the spectacle lens is evaluated based on "(b) Effective visual field" and "(c) Stable fixation visual field" defined as described above. An example in which this evaluation is performed for the spectacles 1 having the bifocal spectacle lens 10 described above will be described. There are various types of progressive-power lenses, also called bifocal spectacles, depending on the distance range to which the focusing distance of the distance vision portion 11 (11R, 11L), which is a part for viewing relatively far provided in the upper part of the spectacle lens, and the focusing distance of the near vision portion 12 (12R, 12L), which is a part for viewing relatively near provided in the lower part, are set, on their widths, on their arrangement on the lens, and the like. For example, there are bifocal spectacles in which a distant object is viewed through the distance vision portion 11 and an intermediate-distance object or a near-distance object is viewed through the near vision portion 12, so-called intermediate-near spectacles in which the distance vision portion 11 is made to see nearer than a bifocal, and spectacles called near-near spectacles in which the distance vision portion 11 is made to see even nearer. In this way, there are various types, such as bifocal spectacles in which a substantially distant object or an intermediate-distance object is viewed through the distance vision portion 11 and an intermediate-distance object or a near-distance object is viewed through the near vision portion 12.

Therefore, the description will be given by taking as an example bifocal spectacles in which a distant object is viewed through the distance vision portion 11 and an intermediate-distance object is viewed through the near vision portion 12. First, the case in which an object located from infinity to 5 m (0.0 D to 0.2 D) (a distant object) is taken as the object to be viewed (a distant object to be viewed OBJ1) will be described with reference to FIGS. 11 to 14. These figures show the case in which a person wearing the spectacles 1 views the distant object to be viewed OBJ1 through the spectacle lens 10 (10R) with the right eye EY(R). FIG. 11 shows a viewing region space similar to FIG. 5, in which the distant object to be viewed OBJ1 is shown as one example. This viewing region space is a spatial region that can be viewed when the wearer of the spectacles 1 faces straight ahead and, without moving the head, rotates only the eyeball around the center of rotation of the eye O and moves the line of sight within the lens region of the spectacle lens 10, and this is referred to as a static visual field space. As can be seen from the fact that the position of the spectacle lens 10 is fixed in FIG. 11, the viewing region space is shown in a state in which the wearer of the spectacles 1 does not perform head movement that would move the position of the spectacles.

Note that the objects to be viewed OBJ1 and OBJ2 shown in FIGS. 11 to 18 are shown as transparent objects to facilitate the description, and show the region of overlap with the three-dimensional clear vision region AC inside the object to be viewed. In practice, the surface of the object to be viewed that is visible from the right eye EY(R) is the viewable region, and the evaluation using this viewable region is performed.

The three-dimensional clear vision region AC in the static visual field space shown in FIG. 11 comprises, similarly to FIG. 5, the distance vision portion clear vision region AC(A) viewed through the distance vision portion 11R, the progressive portion clear vision region AC(B) viewed through the progressive portion 13R, and the near vision portion clear vision region AC(C) viewed through the near vision portion 12R. The three-dimensional clear vision region AC is a region within the static visual field space, and this is referred to as the static clear vision region AC. FIG. 11 further shows an example of the distant object to be viewed OBJ1 located far away in a schematic shape, and the distance vision portion clear vision region AC(A) and the progressive portion clear vision region AC(B) partially overlap the distance vision portion object to be viewed OBJ1. The overlapping portions are indicated by hatching, and there are a distance vision portion viewable region DA(A)1 overlapping the distance vision portion clear vision region AC(A) and a progressive portion viewable region DA(B)1 overlapping the progressive portion clear vision region AC(B). Note that, since these regions exist within the static visual field space and within the static clear vision region AC, these are also referred to as a distance vision portion static viewable region DA(A)1 and a progressive portion static viewable region DA(B)1.

FIG. 12 shows a state in which the wearer tilts the head upward from the state shown in FIG. 11. FIG. 12 shows a state in which the head is tilted upward by an angle φ1, and the central line of sight GO(1) when facing straight ahead is directed upward by the angle φ1 to the line-of-sight position indicated by the central line of sight GO(2). Because the head is tilted in this way, the worn spectacles 1 move upward together with the head and, as shown in FIG. 12, move from the position of the spectacle lens 10(1) indicated by the dashed line to the position of the spectacle lens 10(2) indicated by the solid line. As a result, the entire static visual field space tilts upward by the angle φ1, and the three-dimensional clear vision field region AC in this static visual field space also tilts and moves upward accordingly. That is, as shown in FIG. 12, the distance vision portion clear vision region AC(A), the progressive portion clear vision region AC(B), and the near vision portion clear vision region AC(C) rotationally move upward about the center O of the eye by the angle φ1. The entire visual field space that moves in this way is referred to as a dynamic visual field space, and the entire clear vision region AC that moves accordingly is referred to as a dynamic clear vision region.

Even when the head is tilted in this way, the position of the distant object to be viewed OBJ1 does not change, so the degree of overlap between the distance vision portion clear vision region AC(A), the progressive portion clear vision region AC(B), and the near vision portion clear vision region AC(C) and the distant object to be viewed OBJ1 changes. Therefore, the regions where the two overlap are, as indicated by hatching in FIG. 12, a distance vision portion viewable region DA(A)2 overlapping the distance vision portion clear vision region AC(A), a progressive portion viewable region DA(B)2 overlapping the progressive portion clear vision region AC(B), and a near vision portion viewable region DA(C)2 overlapping the near vision portion clear vision region AC(C). Since these three regions, namely the distance vision portion viewable region DA(A)2, the progressive portion viewable region DA(B)2, and the near vision portion viewable region DA(C)2, exist within the static visual field space in a state in which the center of the line of sight is the central line of sight GO(2), these are also referred to as a distance vision portion static viewable region DA(A)2, a progressive portion static viewable region DA(B)2, and a near vision portion static viewable region DA(C)2.

When the head is thus tilted and moved upward by the angle φ1, the viewable regions change from the distance vision portion static viewable region DA(A)1 and the progressive portion static viewable region DA(B)1 to the distance vision portion static viewable region DA(A)2, the progressive portion static viewable region DA(B)2, and the near vision portion static viewable region DA(C)2. During such tilting movement of the head, the total amount by which the distance vision portion clear vision region AC(A), the progressive portion clear vision region AC(B), and the near vision portion clear vision region AC(C) overlap the distant object to be viewed OBJ1 is determined as a distance vision portion dynamic viewable region DA(A)T1, a progressive portion dynamic viewable region DA(B)T1, and a near vision portion dynamic viewable region DA(C)T1.

The lens performance is evaluated based on the distance vision portion static viewable region DA(A)1 and the progressive portion static viewable region DA(B)1, the distance vision portion static viewable region DA(A)2, the progressive portion static viewable region DA(B)2, and the near vision portion static viewable region DA(C)2, and the distance vision portion dynamic viewable region DA(A)T1, the progressive portion dynamic viewable region DA(B)T1, and the near vision portion dynamic viewable region DA(C)T1, obtained as described above. As one method, this evaluation may be considered to be performed by calculating these three-dimensional regions and comparing them with the three-dimensional region of the distant object to be viewed OBJ1. However, since what the right eye EY(R) sees through the spectacle lens 10(R) is the spectacle-side surface of the distant object to be viewed OBJ1, it is more suitable to perform the evaluation by comparing the surface areas of the above regions instead of the three-dimensional regions. In this case, it is preferable to perform the evaluation by comparing the areas on the projection plane as seen from the right eye EY(R), rather than the actual surface areas.

Incidentally, the three-dimensional clear vision region AC in the static visual field space shown in FIG. 11 also spreads in the lateral direction, and this will be described with reference to FIG. 13, which shows a planar cross-section taken along arrow XII in FIG. 11. FIG. 13 shows a viewing region similar to FIG. 7, in which the distant object to be viewed OBJ1 is shown as one example. This viewing region space is a static visual field space that can be viewed when the wearer of the spectacles 1 faces straight ahead and, without moving the head, rotates only the eyeball around the center of rotation of the eye O and moves the line of sight within the lens region of the spectacle lens 10. FIG. 13 shows a planar cross-section of the distance vision portion clear vision region AC(A) viewed through the distance vision portion 11R, which partially overlaps the distance vision portion object to be viewed OBJ1. This overlapping portion, namely the distance vision portion viewable region DA(A)3 (also referred to as the distance vision portion static viewable region DA(A)3), is indicated by hatching.

FIG. 14 shows a state in which the wearer tilts the head to the right from the state shown in FIG. 13. FIG. 14 shows a state in which the head is tilted to the right by an angle θ1, and the central line of sight GO(1) that was facing straight ahead is directed to the right by the angle θ1 to the line-of-sight position indicated by the central line of sight GO(3). Because the head is tilted in this way, the worn spectacles 1 move to the right together with the head and, as shown in FIG. 14, move from the position of the spectacle lens 10(1) indicated by the dashed line to the position of the spectacle lens 10(3) indicated by the solid line. As a result, the entire static visual field space tilts to the right by the angle θ1, and the three-dimensional clear vision field region AC in this static visual field space also tilts and moves to the right accordingly. That is, as shown in FIG. 14, the distance vision portion clear vision region AC(A) rotationally moves to the right about the center of rotation of the eye O by the angle θ1.

Even when the head is tilted in this way, the position of the distant object to be viewed OBJ1 does not change, so the degree of overlap between the distance vision portion clear vision region AC(A) and the distant object to be viewed OBJ1 changes. Therefore, the region where the two overlap is, as indicated by hatching in FIG. 14, a distance vision portion viewable region DA(A)4 overlapping the distance vision portion clear vision region AC(A). Since this distance vision portion viewable region DA(A)4 exists within the static visual field space in a state in which the center of the line of sight is the central line of sight GO(3), it is also referred to as a distance vision portion static viewable region DA(A)4.

When the head is thus tilted and moved to the right by the angle θ1, the distance vision portion static viewable region DA(A)3 changes to the distance vision portion static viewable region DA(A)4. During such tilting movement, the total amount by which the distance vision portion clear vision region AC(A) overlaps the distant object to be viewed OBJ1 is determined as a distance vision portion dynamic viewable region DA(A)T2.

The lens performance is evaluated based on the distance vision portion static viewable region DA(A)3, the distance vision portion static viewable region DA(A)4, and the distance vision portion dynamic viewable region DA(A)T2 obtained as described above. This evaluation can be performed, for example, by calculating the volumes of the distance vision portion static viewable region DA(A)3, the distance vision portion static viewable region DA(A)4, and the distance vision portion dynamic viewable region DA(A)T2, and comparing them with the volume of the three-dimensional region of the distant object to be viewed OBJ1. Furthermore, the evaluation may be performed by comparing surface areas instead of volumes, or by comparing areas on the projection plane as seen from the right eye EY(R) instead of the actual surface areas.

Next, the case in which an object located at a near distance is viewed as the object to be viewed (a near-distance object to be viewed OBJ2) through the near vision portion 12R will be described with reference to FIGS. 15 to 18. The basic description in this case is the same as the case of viewing the distant object to be viewed OBJ1 located far away through the distance vision portion 11R and the progressive portion 13R, and is similar to the description above. FIG. 15 shows a viewing region space similar to FIG. 11, in which the near-distance object to be viewed OBJ2 is shown. This viewing region space is a static visual field space that can be viewed when the wearer of the spectacles 1 faces straight ahead and, without moving the head, rotates only the eyeball around the center of rotation of the eye O and moves the line of sight within the lens region of the spectacle lens 10.

The three-dimensional clear vision region AC in the static visual field space shown in FIG. 15 comprises, similarly to FIG. 5, the distance vision portion clear vision region AC(A) viewed through the distance vision portion 11R, the progressive portion clear vision region AC(B) viewed through the progressive portion 13R, and the near vision portion clear vision region AC(C) viewed through the near vision portion 12R. FIG. 15 further shows an example of the near-distance object to be viewed OBJ2 located at a near distance in a schematic shape, and the near vision portion clear vision region AC(C) and the progressive portion clear vision region AC(B) partially overlap the near-distance object to be viewed OBJ2. As indicated by hatching, there are a near vision portion viewable region DA(C)11 overlapping the near vision portion clear vision region AC(C) and a progressive portion viewable region DA(B)11 overlapping the progressive portion clear vision region AC(B). Note that, since these regions exist within the static visual field space, these are also referred to as a near vision portion static viewable region DA(C)11 and a progressive portion static viewable region DA(B)11.

FIG. 16 shows a state in which the wearer tilts the head downward from the state shown in FIG. 15. FIG. 16 shows a state in which the head is tilted downward by an angle φ2, and the central line of sight GO(11) when facing straight ahead is directed downward by the angle φ2 to the line-of-sight position indicated by the central line of sight GO(12). Because the head is tilted in this way, the worn spectacles 1 tilt downward together with the head and, as shown in FIG. 16, move from the position of the spectacle lens 10(11) indicated by the dashed line to the position of the spectacle lens 10(12) indicated by the solid line. As a result, the entire static visual field space tilts downward by the angle φ2, and the three-dimensional clear vision field region AC in this static visual field space also tilts downward accordingly. That is, as shown in FIG. 16, the distance vision portion clear vision region AC(A), the progressive portion clear vision region AC(B), and the near vision portion clear vision region AC(C) rotationally move downward about the center O of the eye by the angle φ2.

Even when the head is tilted in this way, the position of the near-distance object to be viewed OBJ2 does not change, so the degree of overlap between the distance vision portion clear vision region AC(A), the progressive portion clear vision region AC(B), and the near vision portion clear vision region AC(C) and the distant object to be viewed OBJ1 changes. The regions where the two overlap are, as indicated by hatching in FIG. 16, a distance vision portion viewable region DA(A)12 overlapping the distance vision portion clear vision region AC(A), a progressive portion viewable region DA(B)12 overlapping the progressive portion clear vision region AC(B), and a near vision portion viewable region DA(C)12 overlapping the near vision portion clear vision region AC(C). Since these regions exist within the static visual field space in a state in which the center of the line of sight is the central line of sight GO(12), these are also referred to as a distance vision portion static viewable region DA(A)12, a progressive portion static viewable region DA(B)12, and a near vision portion static viewable region DA(C)12.

When the head is thus tilted and moved downward by the angle φ2, a distance vision portion static viewable region DA(A)12 appears, and the progressive portion static viewable region DA(B)11 and the near vision portion viewable region DA(C)11 change to the progressive portion static viewable region DA(B)12 and the near vision portion viewable region DA(C)12. During such tilting movement of the head, the total amount by which the distance vision portion clear vision region AC(A), the progressive portion clear vision region AC(B), and the near vision portion clear vision region AC(C) overlap the near-distance object to be viewed OBJ2 is determined as a distance vision portion dynamic viewable region DA(A)T11, a progressive portion dynamic viewable region DA(B)T11, and a near vision portion dynamic viewable region DA(C)11.

The lens performance is evaluated based on the progressive portion static viewable region DA(B)11 and the near vision portion viewable region DA(C)11, the distance vision portion static viewable region DA(A)12, the progressive portion static viewable region DA(B)12, and the near vision portion viewable region DA(C)12, and the distance vision portion dynamic viewable region DA(A)T11, the progressive portion dynamic viewable region DA(B)T11, and the near vision portion dynamic viewable region DA(C)11, obtained as described above. This evaluation can be performed, for example, by calculating the volume, which is the three-dimensional region of each region, and comparing it with the volume of the distant object to be viewed OBJ1. Furthermore, the evaluation may be performed by comparing surface areas instead of volumes, or by comparing the areas on the projection plane as seen from the right eye EY(R) instead of the actual surface areas.

Incidentally, the three-dimensional clear vision region AC in the static visual field space shown in FIG. 15 also spreads in the lateral direction, and this will be described with reference to FIG. 17, which shows a planar cross-section taken along arrow XVI in FIG. 15. FIG. 17 shows a viewing region similar to FIG. 7, in which the near-distance object to be viewed OBJ2 is shown as one example. This viewing region space is a static visual field space that can be viewed when the wearer of the spectacles 1 faces straight ahead and, without moving the head, rotates only the eyeball around the center of rotation of the eye O and moves the line of sight within the lens region of the spectacle lens 10. FIG. 17 shows a planar cross-section of the near vision portion clear vision region AC(C) viewed through the near vision portion 12R, which partially overlaps the near-distance object to be viewed OBJ2. This overlapping portion, namely the near vision portion viewable region DA(C)13 (also referred to as the near vision portion static viewable region DA(C)13), is indicated by hatching.

FIG. 18 shows a state in which the wearer tilts the head to the right from the state shown in FIG. 17. FIG. 18 shows a state in which the head is tilted to the right by an angle θ2, and the central line of sight GO(11) that was facing straight ahead is directed to the right by the angle θ2 to the line-of-sight position indicated by the central line of sight GO(13). Because the head is tilted in this way, the worn spectacles 1 move to the right together with the head and, as shown in FIG. 18, move from the position of the spectacle lens 10(11) indicated by the dashed line to the position of the spectacle lens 10(13) indicated by the solid line. As a result, the entire static visual field space tilts to the right by the angle θ2, and the three-dimensional clear vision field region AC in this static visual field space also tilts and moves to the right accordingly. That is, as shown in FIG. 18, the near vision portion clear vision region AC(C) rotationally moves to the right about the center O of the eye by the angle θ2.

Even when the head is tilted in this way, the position of the near-distance object to be viewed OBJ2 does not change, so the degree of overlap between the near vision portion clear vision region AC(C) and the near-distance object to be viewed OBJ2 changes. Therefore, the region where the two overlap is, as indicated by hatching in FIG. 18, a near vision portion viewable region DA(C)14 overlapping the near vision portion clear vision region AC(C). Since this near vision portion viewable region DA(C)14 exists within the static visual field space in a state in which the center of the line of sight is the central line of sight GO(13), it is also referred to as a near vision portion static viewable region DA(C)14.

When the head is thus tilted and moved to the right by the angle θ1, the near vision portion static viewable region DA(C)13 changes to the near vision portion static viewable region DA(C)14. During such tilting movement, the total amount by which the near vision portion clear vision region AC(C) overlaps the near-distance object to be viewed OBJ2 is determined as a near vision portion dynamic viewable region DA(C)T12.

The lens performance is evaluated based on the near vision portion static viewable region DA(A)13, the near vision portion static viewable region DA(A)14, and the near vision portion dynamic viewable region DA(A)T12 obtained as described above. This evaluation can be performed, for example, by calculating the volume, which is the three-dimensional region of the near vision portion static viewable region DA(A)13, the near vision portion static viewable region DA(A)14, and the near vision portion dynamic viewable region DA(A)T12, and comparing it with the volume of the near-distance object to be viewed OBJ2. Furthermore, the evaluation may be performed by comparing surface areas instead of volumes, or by comparing the areas on the projection plane as seen from the right eye EY(R) instead of the actual surface areas.

In the above description, since the dynamic viewable region changes in accordance with the amount of tilting of the head, the extent to which this amount of tilting is permitted is a major factor. In the reference document described above, "Rinsho Ganka (Clinical Ophthalmology), Vol. 71, No. 13, p. 1796, December 2017," it is described that "(c) Stable fixation visual field: A region in which fixation can be performed comfortably by eye and head movements and in which information can be received effectively, within a range of 60° to 90° horizontally, 20° to 30° upward, and 25° to 40° downward." Based on this, the clear vision region in the visual field space visible through the spectacle lens 10 when the wearer, in a state in which the wearer wears the spectacles 1, combines head and eye movements to turn up to 30 degrees upward, up to 40 degrees downward, and up to 45 degrees in each of the left and right directions, is taken as the dynamic clear vision region. Note that it is preferable to further limit the dynamic clear vision region and to make it the dynamic visual field region in the visual field space visible through the spectacle lens when the wearer combines head and eye movements to turn up to 20 degrees upward, up to 25 degrees downward, and up to 30 degrees in each of the left and right directions.

In this way, it can be taken into account that the stable fixation visual field shown in the document described above is a visual field obtained by adding together eye movement and head movement. In that case, the angle obtained by subtracting an eye rotation angle from the angles becomes the range of head movement. Here, the eye rotation angle can be considered to be "(b) Effective visual field: 30° horizontally, 8° upward, 12° downward" shown in the document described above, and the angles obtained by subtracting these can be taken as the head turning angles. In this case, the wearer's head turns up to 22 degrees upward, up to 28 degrees downward, and up to 30 degrees in each of the left and right directions, respectively; and in a slightly more limited state, the region in the visual field space visible through the spectacle lens when the wearer turns the head up to 12 degrees upward, up to 13 degrees downward, and up to 15 degrees in each of the left and right directions can be taken as the dynamic visual field region.

In the above description, the degree of overlap between the entirety of the clear vision region AC and the objects to be viewed OBJ1, OBJ2 is evaluated; however, the degree of overlap between each of the distance vision portion clear vision region AC(A), the progressive portion clear vision region AC(B), and the near vision portion clear vision region AC(C) and the objects to be viewed OBJ1, OBJ2 may be evaluated separately. Furthermore, a predetermined range may be selected and set from the visible range of the spectacle lens 10, and the degree of overlap between the clear vision region within the set range and the objects to be viewed OBJ1, OBJ2 may be evaluated. For example, in the near vision portion clear vision region AC(C), since the astigmatism in the central part in the lateral direction is small as shown in FIG. 2(A), a predetermined range may be set from the visible range visible through this part. In addition, a predetermined range may be selected and set based on the distance and size of the object to be viewed, and the degree of overlap between the clear vision region within this set range and the objects to be viewed OBJ1, OBJ2 may be evaluated.

By evaluating the performance of the spectacle lens and the like using the evaluation method described above, it is possible to perform correction of the design of this spectacle lens based on this evaluation, or to perform selection of an appropriate spectacle lens design from a plurality of spectacle lens designs prepared in advance. Furthermore, by manufacturing a spectacle lens based on the correction of the design or the selection of an appropriate spectacle lens design performed in this way, it is possible to obtain a spectacle lens suited to the wearer. This series of steps will be described with reference to FIG. 19.

This series of steps, as shown in FIG. 19, comprises: an information acquisition step S10 for performing vision tests such as refractive examination of the wearer of the spectacles and acquiring various information to obtain information about the spectacle lens suitable for the wearer; a base design step 20 for performing the design of the base spectacle lens or acquiring lens design data based on the information acquired in this way; an evaluation step S30 for evaluating the spectacle lens (evaluating whether the spectacle lens meets the intended use of the wearer) based on the design of the base spectacle lens; a spectacle lens redesign step S40 for performing selection or corrective design of the spectacle lens design when this evaluation fails; and a spectacle lens manufacturing step S50 for manufacturing the spectacle lens based on the design when the evaluation in the evaluation step S30 passes.

The base spectacle lens design step S10 is an operational step currently generally performed at optical shops and the like. First, in the refraction (vision) examination step S11, a refraction examination and vision test such as those performed at a general optical shop are carried out on the person to be fitted (the wearer), and furthermore, in the interview step S12, in order to design a lens suited to the wearer's eyes, an interview is conducted to find out what kind of intended use the wearer is seeking spectacles for, the frequency of use, the degree of importance, and so on. Then, distance information to the object to be viewed corresponding to the intended use (for example, a computer screen) is acquired (distance information acquisition step S13). The data for the lens design thus determined is sent to the spectacle lens manufacturer, and the spectacle lens manufacturer performs the design of the base spectacle lens or acquires lens design data based on the received data (base design step S20).

Note that in the base design step S20, instead of designing the base spectacle lens, it is also possible to prepare various types of base spectacle lens designs in advance and select from among them the base spectacle lens design suited to the wearer's purpose and intended use, based on the results of the refractive examination and vision test, the intended use of the spectacles, the distance information to the object to be viewed, and the like acquired in step S10.

Next, in the evaluation step S30, an evaluation is performed as to whether the base spectacle lens design thus designed or selected is suitable for the wearer. This evaluation step S30 comprises: a three-dimensional clear vision region calculation step S31 for performing calculation of the three-dimensional clear vision region and calculating the three-dimensional clear vision region based on the base spectacle lens design; a step S32 of detecting a static viewable region from the overlap between the clear vision region calculated in this way and an object to be viewed present in the static visual field space; and further, a step S33 of detecting a dynamic viewable region that occurs when the head is moved, from the static viewable region. The evaluation step S30 further comprises an evaluation step S34 of evaluating lens performance and the like based on the static and dynamic viewable regions detected in this way, and a judgment step S35 of determining the next step to proceed to based on the evaluation in evaluation step S34.

In step S31 for calculating the three-dimensional clear vision region, as described above with reference to FIGS. 3 and 4, the wearer wears the spectacle lens 10, and the region AC(0.2) where the contrast value C is equal to or greater than 0.2, for example, is calculated on the line of sight G through which the wearer views through the spectacle lens. Then, the line of sight G is moved within the visible range of the spectacle lens and the region AC(0.2) is integrated to calculate the three-dimensional clear vision region as shown in FIGS. 5 to 8. Next, based on the static viewable region detected in step S32 and the dynamic viewable region detected in step S33, it is evaluated whether the base spectacle lens design designed or selected in step S20 meets the intended use and the like of the wearer (step S34).

When the evaluation in step S35 passes, the process proceeds from judgment step S35 to the spectacle lens manufacturing step S50, and the spectacle lens is manufactured based on the design of the spectacle lens performed in the base design step S20 or the acquired lens design data. On the other hand, when the evaluation in step S35 fails, the process proceeds from judgment step S35 to the spectacle lens redesign step S40, and selection or corrective design of the spectacle lens design is performed. Once the re-selection or corrective design of the design is performed in this way, the process returns to the three-dimensional clear vision region calculation step S31 and the three-dimensional clear vision region based on the re-selection or corrective design is calculated. Thereafter, the above steps from step S32 are repeated.

By following the above steps, the spectacle lens is manufactured based on the spectacle lens design data whose evaluation has passed in step S32, so that the optimal spectacle lens adapted to the wearer's vision and intended use can be produced.

### LIST OF REFERENCE SIGNS

- 1: A pair of spectacle lenses
- 10: Spectacle lens
- 10R: Spectacle lens for right eye
- 10L: Spectacle lens for left eye
- 11R, 11L: Near vision portion for right eye, left eye
- 12R, 12L: Distance vision portion for right eye, left eye
- 13R, 13L: Progressive portion for right eye, left eye
- 15: Spectacle frame
- C: Contrast value
- EY(R): Right eye
- AC: Three-dimensional clear vision region AC
- AC(A): Distance vision portion clear vision region
- AC(B): Progressive portion clear vision region
- AC(C): Near vision portion clear vision region

## Claims

1. A method for evaluating a spectacle lens, comprising:
a calculation step of calculating a three-dimensional clear vision region in a visual field space visible through the spectacle lens of spectacles in a state in which a wearer wears the spectacles;
a viewable region detection step of detecting, when the wearer views, through the spectacle lens, an object to be viewed present in the visual field space, a viewable region in which the three-dimensional clear vision region and the object to be viewed overlap; and
an evaluation step of evaluating the performance of the spectacle lens based on the detected viewable region.

2. The method for evaluating the spectacle lens according to claim 1, wherein, in the calculation step, in the state in which the wearer wears the spectacles, the three-dimensional clear vision region in a static visual field space visible through the spectacle lens when the wearer moves the eye without moving the head is calculated as a static clear vision region; in the viewable region detection step, when the wearer views the object to be viewed present in the static visual field space through the spectacle lens, a static viewable region in which the static clear vision region and the object to be viewed overlap is detected; and in the evaluation step, the performance of the spectacle lens is evaluated based on the detected static viewable region.

3. The method for evaluating the spectacle lens according to claim 1, wherein, in the calculation step, in the state in which the wearer wears the spectacle lens, the three-dimensional clear vision region in a dynamic visual field space visible through the spectacle lens when the wearer rotates the head up, down, left, and right and moves the eye is calculated as a dynamic clear vision region; in the viewable region detection step, when the wearer views the object to be viewed present in the dynamic visual field space through the spectacle lens, a dynamic viewable region in which the dynamic clear vision region and the object to be viewed overlap is detected; and in the evaluation step, the performance of the spectacle lens is evaluated based on the detected dynamic viewable region.

4. The method for evaluating the spectacle lens according to claim 3, wherein, in the state in which the wearer wears the spectacle lens, for each of an eyeball rotation angle and a head movement angle of the wearer, a movement range in each of the upward, downward, leftward, and rightward directions is set, and a clear vision region in the visual field space visible through the spectacle lens is calculated as a dynamic visual field region.

5. The method for evaluating the spectacle lens according to claim 4, wherein, in the state in which the wearer wears the spectacle lens, the clear vision region in the visual field space visible through the spectacle lens when the wearer combines head and eye movements to turn up to 30 degrees upward, up to 40 degrees downward, and up to 45 degrees in each of the left and right directions is calculated as the dynamic visual field region.

6. The method for evaluating the spectacle lens according to claim 5, wherein, in the state in which the wearer wears the spectacle lens, the clear vision region in the visual field space visible through the spectacle lens when the wearer combines head and eye movements to turn up to 20 degrees upward, up to 25 degrees downward, and up to 30 degrees in each of the left and right directions is calculated as the dynamic visual field region.

7. The method for evaluating the spectacle lens according to claim 4, wherein, in the state in which the wearer wears the spectacle lens, the clear vision region in the visual field space visible through the spectacle lens when the wearer turns the head up to 22 degrees upward, up to 28 degrees downward, and up to 30 degrees in each of the left and right directions is calculated as the dynamic visual field region.

8. The method for evaluating the spectacle lens according to claim 7, wherein, in the state in which the wearer wears the spectacle lens, the clear vision region in the visual field space visible through the spectacle lens when the wearer turns the head up to 12 degrees upward, up to 13 degrees downward, and up to 15 degrees in each of the left and right directions is calculated as the dynamic visual field region.

9. The method for evaluating the spectacle lens according to claim 1, wherein, in the calculation step, a linear clear vision region on a straight line extending from the eye of the wearer through a predetermined position within a visible range of the spectacle lens is calculated, and, in the three-dimensional region calculation step, the predetermined position is moved within the visible range of the spectacle lens and the linear clear vision region calculated by the calculation step is cumulatively displayed to obtain the three-dimensional clear vision region.

10. The method for evaluating the spectacle lens according to claim 1, wherein, in the calculation step, a visible range of the spectacle lens is defined by a vertical angle (φ) and a lateral angle (θ) covering the visible range of the spectacle lens as seen from the eye of the wearer, and a distance index (D) indicating a position on a straight line extending from the eye of the wearer through a predetermined position within the visible range of the spectacle lens, and the three-dimensional clear vision region is expressed in three-dimensional polar coordinates (D, φ, θ), and, in the volume calculation step, positions within the clear vision region expressed in the three-dimensional polar coordinates (D, φ, θ) are cumulatively displayed within the clear vision region to obtain the three-dimensional clear vision region.

11. The method for evaluating the spectacle lens according to claim 1, wherein, in the calculation step, a visible range of the spectacle lens is defined by a vertical angle (φ) and a lateral angle (θ) covering the visible range of the spectacle lens as seen from the eye of the wearer, and a distance (r) indicating a position on a straight line extending from the eye of the wearer through a predetermined position within the visible range of the spectacle lens, and the three-dimensional clear vision region is expressed in three-dimensional polar coordinates (r, φ, θ), and, in the volume calculation step, positions within the clear vision region expressed in the three-dimensional polar coordinates (r, φ, θ) are cumulatively displayed within the clear vision region to obtain the three-dimensional clear vision region.

12. The method for evaluating the spectacle lens according to claim 1, wherein the three-dimensional clear vision region corresponds to a range in which a contrast value of an object viewed through the spectacle lens by the wearer in the state in which the wearer wears the spectacles is equal to or greater than a predetermined value.

13. The method for evaluating the spectacle lens according to claim 12, wherein, as the contrast value for defining the three-dimensional clear vision region, a plurality of contrast values are used, such as a contrast value at which there is no problem with the readability of an object and a contrast value at which no decrease in contrast is felt, and the three-dimensional clear vision region is selectively set based on judgment levels of the plurality of contrast values.

14. The method for evaluating the spectacle lens according to claim 12, wherein, within a visible range of the spectacle lens, an iso-contrast surface on which the contrast value is equal is determined, and the three-dimensional clear vision region is defined using the iso-contrast surface.

15. The method for evaluating the spectacle lens according to claim 1, wherein a predetermined range is selected and set from within a visible range of the spectacle lens, the three-dimensional clear vision region within the set range is determined, and, in the evaluation step, the performance of the spectacle lens is evaluated based on the three-dimensional clear vision region within the determined predetermined range.

16. The method for evaluating the spectacle lens according to claim 15, wherein the spectacle lens is a progressive-power lens, and at least one of a distance vision portion, a progressive portion, and a near vision portion of the progressive-power lens is the predetermined range.

17. The method for evaluating the spectacle lens according to claim 15, wherein a range in which an astigmatism distribution of the progressive-power lens is small is set as the predetermined range.

18. A method for designing a spectacle lens, comprising a design step of performing a corrective design of a design of the spectacle lens based on the evaluation in the evaluation step according to any one of claims 1 to 17.

19. A method for designing a spectacle lens, comprising a selection step of selecting an appropriate spectacle lens design from a plurality of spectacle lens designs prepared in advance based on the evaluation in the evaluation step according to any one of claims 1 to 17.

20. A method for manufacturing a spectacle lens, comprising a step of manufacturing the spectacle lens based on the corrective design in the design step according to claim 18.

21. A method for manufacturing a spectacle lens, comprising a step of manufacturing the spectacle lens based on the selection in the selection step according to claim 19.
